# EUROPÄISCHE PATENTSCHRIFT

(11) **EP 0 807 357 B1**
(45) Veröffentlichungstag und Bekanntmachung des Hinweises auf die Patenterteilung: **25.04.2001**
(21) Anmeldenummer: 96900243.5
(22) Anmeldetag: 01.01.1996
(51) Int. Cl.: H04Q 3/52, H04Q 3/68

(54) **VERFAHREN ZUM BETRIEB EINER MEHRSTUFIGEN NxN-RAUMKOPPELANORDNUNG**
PROCESS FOR OPERATING A MULTISTAGE NxN SPACE-SWITCHING ARRANGEMENT
PROCEDE DE FONCTIONNEMENT D'UN SYSTEME DE COMMUTATION SPATIALE NxN MULTINIVEAU

(30) Priorität: 27.01.1995 DE 19502547
(43) Veröffentlichungstag der Anmeldung: 19.11.1997
(73) Patentinhaber: SIEMENS AKTIENGESELLSCHAFT, 80333 München (DE)
(72) Erfinder: JAHREIS, Oliver, D-80687 München (DE)
(86) Internationale Anmeldenummer: DE9600001
(87) Internationale Veröffentlichungsnummer: WO9623389

(56) Entgegenhaltungen:
- EP-A- 0 353 871
- DE-A- 2 626 417
- US-A- 5 002 354
- PATENT ABSTRACTS OF JAPAN vol. 11, no. 195 (E-518), 23.Juni 1987 & JP,A,62 020493 (NEC CORP), 29.Januar 1987,
- PATENT ABSTRACTS OF JAPAN vol. 11, no. 19 (P-537), 20.Januar 1987 & JP,A,61 194408 (NIPPON TELEGR & TELEPH), 28.August 1986,
- APPLIED OPTICS, Bd. 14, Nr. 11, November 1975, NEW YORK US, Seiten 2559-2560, XP002001614 SOREF ET AL.: "Crosstalk reduction in optical switching"

## Beschreibung

Moderne, zukunftssichere optische Weitverkehrsnetze müssen hohe Anforderungen bezüglich Kapazität, Flexibilität, Zuverlässigkeit und Transparenz erfüllen. Diese Anforderungen an ein Transportnetz werden bei einer Übertragung und Vermittlung der Daten im optischen Frequenzmultiplex optimal erfüllt. Beim optischen Frequenzmultiplex (Wellenlängenmultiplex - WDM) ist auf einer Faser eine Mehrzahl von Übertragungskanälen gebündelt, die durch ihre sich untereinander um einige 100 GHz unterscheidenden optischen Trägerfrequenzen (Wellenlängen) voneinander getrennt sind. Die Zahl der maximal möglichen Kanäle wird dabei durch die Verstärkungsbandbreite optischer Faserverstärker begrenzt.

Zum semipermanenten und blockierungsfreien Koppeln von optischen Kanälen sind optische Cross-Connects (OCC) vorgesehen. Solche optischen Cross-Connects weisen in der Regel sowohl eine Frequenz- als auch eine Raumschaltstufe auf.
Aus ICC'93 Conf.Rec. Vol.3/3, 1300 ... 1307, Fig.10, ist in diesem Zusammenhang eine WDM-Koppelanordnung mit eingangsseitigen, jeweils das auf der zugehörigen Eingangsfaser ankommende optische Signal nach Wellenlängen aufteilenden Wellenlängen-Demultiplexern, einer nachfolgenden Raumkoppelanordnung (Space Switch), nachfolgenden, die jeweils ankommende Wellenlänge auf die jeweilige abgehende Wellenlänge umsetzenden einstellbaren Wellenlängen-Konvertern und ausgangsseitigen, die ihnen zugeführten Wellenlängen zusammenfassenden Wellenlängen-Multiplexern bekannt.
Aus ntz 46(1993)1, Seiten 16...21, Bild 13 und 14, sind WDM-Koppelanordnungen bekannt, bei denen ebenfalls eingangsseitige Wellenlängen-Demultiplexer (1/N in Bild 13; unbenannt in Bild 14), ausgangsseitige Wellenlängen-Multiplexer (N/1 in Bild 13; unbenannt in Bild 14), Wellenlängen-Konverter (Frequenzstufen in Bild 13; Filter und Frequenzumsetzer in Bild 14) zur Wellenlängenumsetzung auf die jeweils abgehende Wellenlänge sowie eine dazwischenliegende Raumkoppelanordnung (Raumstufe in Bild 13; Faserschalter in Bild 14) vorgesehen sind.
Bei solchen Anordnungen von optischen (De-)Multplexern und Raumkoppelanordnung liegt ggf. an jedem Eingang der Raumkoppelanordnung stets dieselbe optische Frequenz (Wellenlänge) an, wobei bei gleicher Frequenzbelegung der einzelnen Lichtwellenleiter jeweils mit dem gleichen Frequenzmultplex von M optischen Trägerfrequenzen die optische Frequenz eines Eingangs der Raumkoppelanordnung sich alle M Eingänge wiederholt.

Aufgabe der Raumkoppelanordnung ist es, die Eingänge mit den Ausgängen blockierungsfrei zu verbinden, d.h., in jedem Belastungsfall zwischen einem beliebigen freien Eingang und einem beliebigen freien Ausgang einen Weg durch die Raumkoppelanordnung schalten zu können.
Eine mögliche Architektur für eine Raumkoppelanordnung mit N Eingängen und N Ausgängen ist eine Kombination von jeweils N 1xN-Baumstrukturen an den N Eingängen bzw. N Ausgängen mit einem Zwischenleitungs-Netzwerk (Shuffle-Netzwerk) zwischen den Baumstrukturen der Ein- und Ausgänge; dabei kann jede Baumstruktur mit einer Pyramide von 1x2-Schaltern gebildet sein (siehe z.B. JP-A-61194408, JP-A-62020493).
Technische Realisierungen optischer 1x2-Schalter weisen allerdings nur eine begrenzte Nebensprechdämpfung auf: Ein Teil des jeweiligen Signals gelangt auch zu dem Ausgang, der gerade nicht angewählt ist, was sich als ein Nebensprechen eines Signalpfades auf einen anderen Signalpfad in der Raumkoppelanordnung auswirkt. Bei der noch unbefriedigenden Nebensprechdämpfung heute verfügbarer optischer Schalter auf Halbleiterbasis genügt daher eine Raumkoppelanordnung, die aus solchen Schaltern aufgebaut ist, nicht ohne weiteres den systemtechnischen Anforderungen. Dabei ist besonders ein Nebensprechen zwischen zwei Kanälen gleicher optischer Frequenz kritisch, während bei einem Nebensprechsignal einer anderen optischen Frequenz eine zusätzliche, hinreichend große Nebensprechdämpfung durch den Raumkoppelanordnungs-Ausgängen nachfolgende Filter der Multiplexerstufe bewirkt werden kann.

Zur vergleichsweise erhöhten Nebensprechunterdrückung kann (gemäß WO 96/08932)
in einer optischen 1×N-Schaltmatrix in Baumstruktur mit einem optischen Eingang/Ausgang und einer Anzahl N optischer Ausgänge/Eingänge, bestehend aus
- einer den Eingang/Ausgang mit jedem Ausgang/Eingang verbindenden optischen Wellenleiterstruktur aus sich vom Eingang/Ausgang in Richtung Ausgänge/Eingänge in Verzweigungspunkten baumartig verzweigenden optischen Wellenleitern und
- je einem optischen Umschalter pro Verzweigungspunkt zum wahlweisen Umschalten zwischen von diesem Verzweigungspunkt abzweigenden Wellenleitern,
den Ausgängen/Eingängen jeweils ein optischer Torschalter zum wahlweisen optischen Freigeben und Blockieren dieses Ausgangs /Eingangs in Abhängigkeit von einem Schaltzustand des Umschalters eines Verzweigungspunktes, von dem ein abzweigender Wellenleiter mit diesem Ausgang/Eingang verbunden ist, zugeordnet sein;
in einer optischen N×N-Schaltmatrix in Baumstruktur mit einer Anzahl N optischer Eingänge und N optischer Ausgänge, bestehend aus
- zwei Matrix-Reihen aus jeweils N optischen 1xN-Schaltmatrizen, wobei jede 1×N-Schaltmatrix je einen optischen Eingang/Ausgang und je N optische Ausgänge/Eingänge aufweist, und
- einem optischen Vermittlungsnetzwerk mit zwei Anschluß-Reihen aus jeweils N×N optischen Anschlüssen, deren jeder als optischer Ein- und/oder Ausgang dient, wobei jeder Anschluß einer Anschluß-Reihe optisch mit jedem Anschluß der anderen Anschluß-Reihe verbindbar ist, wobei
- die insgesamt N×N optischen Ausgänge/Eingänge der N optischen 1×N-Schaltmatrizen jeder Matrix-Reihe parallel mit den N×N optischen Anschlüssen je einer Anschluß-Reihe verbunden sind und
- die insgesamt N optischen Eingänge/Ausgänge der N optischen 1×N-Schaltmatrizen jeder Matrix-Reihe die N Eingänge und/oder N Ausgänge der N×N-Schaltmatrix bilden,
können die optischen 1×N-Schaltmatrizen in der angegebenen Weise ausgebildete 1×N-Schaltmatrizen sein.
Dabei sind die Umschalter und Torschalter zweckmässigerweise 1×2-Schalter mit zwei Durchschaltezuständen, in denen das Licht im wesentlichen über jeweils eine der beiden Schaltstrecken, den jeweiligen Durchschalteweg, geführt wird und auf die jeweils andere Schaltstrecke allenfalls ein stark abgeschwächter Lichtanteil ungewollt übergekoppelt wird, und einem dritten Zustand, in dem das Licht auf beiden Durchschaltewegen die gleiche Abschwächung erfährt und insofern auf keinem der beiden Wege Signale "durchgeschaltet" werden. Solche mehr als zwei Schaltzustände aufweisende 1x2-Schalter sind beispielsweise (aus B.Acklin, M.Schienle, B.Weiss, L. Stoll, G.Müller "Novel optical switches based on carrier injection in three and five waveguide couplers: TIC and SIC", Electronics Letters, 30(1994)3, 217, bekannte) TIC-Schalter oder auch andere digitale optische Schalter mit einem dritten Schaltzustand, in dem das Licht auf beiden Durchschaltewegen die gleiche Abschwächung erfährt. Es werden dann in jeder 1xN-Schaltmatrix nur diejenigen Umschalter und derjenige Torschalter, über die der beabsichtigte Lichtweg führt, in den entsprechenden Durchschaltzustand gesteuert, und ausserdem wird der mit dem mit diesem Torschalter verbundenen Umschalter verbundene weitere Torschalter in einen zu einem optischen Sumpf führenden Durchschaltezustand gesteuert; alle übrigen Umschalter und Torschalter befinden sich in dem dritten Schaltzustand (WO 96/08932).

Zur Unterdrückung von Nebensprechen k-ter Ordnung in einer mehrstufigen optischen NxN-Raumkoppelanordnung mit eingangsindividuellen optischen Splittern und ausgangsindividuellen dämpfung auch eine erhöhte Einfügungsdämpfung mit sich. Die Einfügungsdämpfung ist aber neben der Nebensprechdämpfung eine zweite kritische Größe einer Raumkoppelanordnung, die es zu optimieren gilt.

Die Erfindung zeigt nun einen anderen Weg zu einer erhöhten Nebensprechdämpfung, und zwar ohne daß damit auch eine erhöhte Einfügungsdämpfung einhergehen muß.

Die Erfindung betrifft ein Verfahren zum Betrieb einer mehrstufigen NxN-Raumkoppelanordnung mit
N = 2ⁿ (mit n = 1, 2, 3, ...) jeweils einem Raumkoppelanordnungs-Eingang nachfolgenden Eingangs-Pyramiden von zweier Durchschaltezustände fähigen 1x2-Schaltern und
N = 2ⁿ jeweils einem Raumkoppelanordnungs-Ausgang vorangehenden Ausgangs-Pyramiden von zweier Durchschaltezustände fähigen 1x2-Schaltern sowie
einem zwischen Eingangs- und Ausgangs-Pyramiden verlaufenden (Perfect Shuffle-)Zwischenleitungsnetzwerk von N² Zwischenleitungen,
in der ein Kanalnebensprechen zwischen um jeweils M = 2^{m} (mit m = 1, 2, ..., n-1) Eingänge oder ein Vielfaches davon gegeneinander versetzten Eingängen kritisch ist,
insbesondere in einer optischen Koppelanordnung mit eingangsseitigen, jeweils das auf einer zugehörigen Eingangsfaser ankommende WDM-Signal nach Wellenlängen aufteilenden Wellenlängen-Demultiplexern,
der nachfolgenden, mit Pyramiden von zweier Durchschaltezustände fähigen integriert-optischen 1x2-Schaltern gebildeten NxN-Raumkoppelanordnung, bei der an jedem Eingang stets Licht ein und derselben, sich in Abständen von jeweils M = 2^{m} (mit m = 1, 2, ..., n-1) Eingängen wiederholenden Wellenlänge (optischen Trägerfrequenz) auftritt und der in einer optischen Raum-Wellenlänge-(R-W-)Koppelanordnung einstellbare Wellenlängen-Konverter nachfolgen können, die die jeweilige ankommende Wellenlänge auf eine feste abgehende Wellenlänge umsetzen, Ausgangspyramiden von zweier Durchschaltezustände fähigen 1x2-Schaltern kann man auch (gemäß EP-A1-0 353 871) diese jeweils N Eingänge aufweisenden Schalterpyramiden von für N Eingänge an sich ausreichenden log₂ N Pyramidenstufen auf (k + log₂ N) Pyramidenstufen erweitern, wobei aber nur N Pyramideneingänge an entsprechende Ausgänge von N optischen Splittern angeschlossen werden und die übrigen Pyramideneingänge unbeschaltet bleiben und wobei in jeder Pyramidenstufe alle 1x2-Schalter nur gemeinsam zu schalten sind; etliche (aber durchaus nicht alle) nicht in einen Verbindungsweg einbezogene 1x2-Schalter sind dabei ggf. in einen Schaltzustand erhöhter Nebensprechdämpfung geschaltet.

Die Einfügung von zusätzlichen Schaltstufen in die Baumstruktur bringt allerdings neben einer erhöhten Nebensprechdämpfung auch eine erhöhte Einfügungsdämpfung mit sich. Die Einfügungsdämpfung ist aber neben der Nebensprechdämpfung eine zweite kritische Größe einer Raumkoppelanordnung, die es zu optimieren gilt.

Die Erfindung zeigt nun einen anderen Weg zu einer erhöhten Nebensprechdämpfung, und zwar ohne daß damit auch eine erhöhte Einfügungsdämpfung einhergehen muß.

Die Erfindung betrifft ein Verfahren zum Betrieb einer (2(log₂ N)) -stufigen NxN-Raumkoppelanordnung mit
N = 2ⁿ (mit n = 1, 2, 3, ...) jeweils einem Raumkoppelanordnungs-Eingang nachfolgenden, (log₂ N)-stufigen Eingangs-Pyramiden von zweier Durchschaltezustände fähigen 1x2-Schaltern und
N = 2ⁿ jeweils einem Raumkoppelanordnungs-Ausgang vorangehenden, (log₂ N)-stufigen Ausgangs-Pyramiden von zweier Durchschaltezustände fähigen 1x2-Schaltern sowie
einem zwischen Eingangs- und Ausgangs-Pyramiden verlaufenden Perfect Shuffle-Zwischenleitungsnetzwerk von N² Zwischenleitungen,
in der ein Kanalnebensprechen zwischen um jeweils M = 2^{m} (mit m = 1, 2, ..., n-1) Eingänge oder ein Vielfaches davon gegeneinander versetzten Eingängen kritisch ist,
insbesondere in einer optischen Koppelanordnung mit
eingangsseitigen, jeweils das auf einer zugehörigen Eingangsfaser ankommende WDM-Signal nach Wellenlängen aufteilenden Wellenlängen-Demultiplexern,
der nachfolgenden, mit Pyramiden von zweier Durchschaltezustände fähigen integriert-optischen 1x2-Schaltern gebildeten NxN-Raumkoppelanordnung, bei der an jedem Eingang stets Licht ein und derselben, sich in Abständen von jeweils M = 2^{m} (mit m = 1, 2, ..., n-1) Eingängen wiederholenden Wellenlänge (und damit optischen Trägerfrequenz) auftritt und der in einer optischen Raum-Wellenlänge-(R-W-)Koppelanordnung einstellbare Wellenlängen-Konverter nachfolgen können, die die jeweilige ankommende Wellenlänge auf eine feste abgehende Wellenlänge umsetzen,
und ausgangsseitigen, jeweils die ihnen zugeführten Signale unterschiedlicher Wellenlängen zu einem WDM-Signal zusammenfassenden Wellenlängen-Multiplexern;
dieses Verfahren ist erfindungsgemäß dadurch gekennzeichnet, dass - bei direktem Anschluss jeweils zweier Zwischenleitungen an jeden der jeweils 2ⁿ⁻¹ pyramidenbasisseitigen 1x2-Schalter n-stufiger Pyramiden von 1x2-Schaltern -
zu einem von einer i-ten Eingangspyramide zu einer Ausgangspyramide verlaufenden Verbindungsweg, der sich vom Eingang der Eingangspyramide über die n diesen Eingang mit dem Eingangspyramidenausgang verbindenden 1x2-Schalter, die diesen Eingangspyramidenausgang mit dem entsprechenden Ausgangspyramideneingang verbindende Zwischenleitung und die n diesen Ausgangspyramideneingang mit dem Ausgang der Ausgangspyramide verbindenden 1x2-Schalter zu diesem Ausgang erstreckt,
in einem von einer j-ten (mit |i - j| = v·2^{m}, v = 1, 2, ...) Eingangspyramide zu der genannten Ausgangspyramide verlaufenden Nebensprechweg, der sich vom Eingang der Eingangspyramide über die n diesen Eingang mit dem Eingangspyramidenausgang verbindenden 1x2-Schalter, die den Eingangspyramidenausgang mit dem entsprechenden Ausgangspyramideneingang verbindende Zwischenleitung und die n diesen Ausgangspyramideneingang mit dem Ausgang der Ausgangspyramide verbindenden 1x2-Schalter zu diesem Ausgang erstreckt,
alle nicht zugleich in einen Verbindungsweg einbezogenen 1x2-Schalter in den Schaltzustand maximaler Nebensprechdämpfung geschaltet werden;
in weiterer Ausgestaltung der Erfindung können in der Eingangspyramide die maximal m nicht zugleich in einen Verbindungsweg einbezogenen, zwischen dem Pyramideneingang und dem mit der Ausgangspyramide verbundenen Pyramidenausgang liegenden 1x2-Schalter und in der Ausgangspyramide die m nicht zugleich in einen Verbindungsweg einbezogenen, zwischen dem mit der Eingangspyramide verbundenen Pyramideneingang und dem Pyramidenausgang liegenden 1x2-Schalter in die vom Nebensprechweg jeweils wegweisende Durchschaltelage geschaltet werden.

Die Erfindung, die eine Erweiterung von Schalterpyramiden auf mehr als log₂ N Pyramidenstufen und darin ggf. in den Schaltzustand erhöhter Nebensprechdämpfung gelangende zusätzliche 1x2-Schalter vermeidet, bringt durch gezielte Nutzung der grundsätzlich bestehenden Möglichkeit, nicht benutzte Schalter in eine solche Stellung zu bringen, in der unerwünschte Nebensprechpfade optimal gedämpft werden, den Vorteil einer erhöhten Nebensprechdämpfung in einem definierten Nebensprechweg zu einem definierten Nutzverbindungsweg mit sich, indem sie es ermöglicht, von in einem Abstand v·2^{m} (mit m = 1, 2, ..., n-1; v = 1, 2, ...) zum jeweiligen Nutzsignaleingang befindlichen Eingängen herrührendes Nebensprechen zu unterdrücken, und zwar ohne daß damit auch eine mit einer Einfügung zusätzlicher 1x2-Schalter verbundene erhöhte Einfügungsdämpfung einhergehen muß. Dabei ist die Erfindung auch nicht daran gebunden, dass die zweier Durchschaltezustände fähigen 1x2-Schalter auch noch eines dritten Schaltzustandes fähig sind.

Es sei an dieser Stelle bemerkt, daß es (aus EP-A1-0 282 268) bekannt ist, zur Verringerung von Nebensprechwirkungen in einer mit Eingangs- und Ausgangs-Pyramiden aufgebauten opti schen Raumkoppelanordnung in bestimmten Koppelpfaden Blindkoppelpunkte zur Egalisierung von Lichtintensitäten vorzusehen; nähere Berührungspunkte mit der vorliegenden Erfindung sind nicht gegeben.

Weitere Besonderheiten der Erfindung werden aus der nachfolgenden näheren Erläuterung eines Ausführungsbeispiels anhand der Zeichnungen ersichtlich. Dabei zeigen
- FIG 1 schematisch eine R-W-Koppelanordnung und
- FIG 2 schaltungstechnische Einzelheiten dazu.

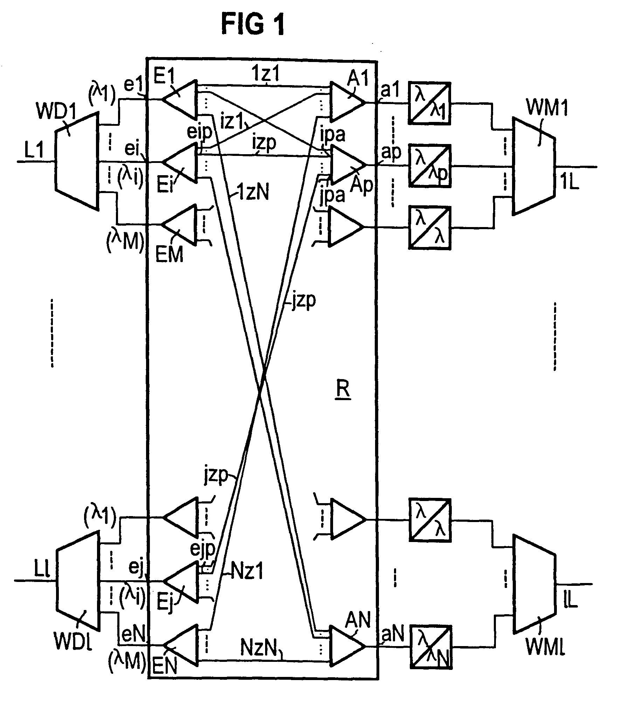

In der Zeichnung FIG 1 ist schematisch in einem zum Verständnis der Erfindung erforderlichem Umfange ein Ausführungsbeispiel einer zwischen 1 Eingangsfasern L1,...,L1 und 1 Ausgangsfasern 1L,...,1L liegenden optischen Raum-Wellenlänge(R-W-)Koppelanordnung dargestellt, wobei auf einer Eingangsfaser jeweils M Wellenlängen λ₁, ..., λ_{M} und auf einer Ausgangsfaser ebenfalls jeweils M Wellenlängen λ₁, ..., **λ**_{M} im Wellenlängenmultiplex zusammengefasst sein mögen.

Die 1 Eingangsfasern L1, ..., L1 führen jeweils zu einem Wellenlängen-Demultiplexer WD1, ..., WD1, der das auf der jeweils zugehörigen Eingangsfaser L1, ..., Ll ankommende optische Signal nach Wellenlängen aufteilt. An die insgesamt maximal N = 2ⁿ (mit n = 1, 2, 3, ...)Ausgänge der Wellenlängen-Demultiplexer WD1, ..., WDl sind die N Eingänge e1, ..., eN einer integriert-optischen NxN-Raumkoppelanordnung R angeschlossen, so dass an jedem Eingang der NxN-Raumkoppelanordnung R stets Licht ein und derselben Wellenlänge (bzw. optischen Trägerfrequenz) auftritt, wobei die Wellenlänge (bzw. optische Trägerfrequenz) der einzelnen Eingänge sich in Abständen von jeweils M = 2^{m} Eingängen (mit m = 1, 2, ..., n-1) wiederholt.

Die Raumkoppelanordnung R weist
N = 2ⁿ jeweils einem Raumkoppelanordnungs-Eingang e1,...,eN nachfolgende Eingangs-Pyramiden E1, ..., EN von zweier Durchschaltezustände fähigen integriert-optischen 1x2-Schaltern,
N = 2ⁿ jeweils einem Raumkoppelanordnungs-Ausgang a1,...,aN vorangehende Ausgangs-Pyramiden A1, ..., AN von zweier Durchschaltezustände fähigen integriert-optischen 1x2-Schaltern sowie
ein zwischen den die Eingangspyramidenbasen bildenden Ausgängen der Eingangs-Pyramiden E1, ..., EM, ..., EN und den die Ausgangspyramidenbasen bildenden Eingängen der Ausgangs-Pyramiden symmetrisch verlaufendes Perfect-Shuffle-Zwischenleitungsnetz von N² Zwischenleitungen 1z1, ..., 1zN, ..., Nz1, ..., NzN auf, durch das jede der N Eingangspyramiden mit jeder der N Ausgangspyramiden verbunden ist.

An die Ausgänge a1, ..., aN der Raumkoppelanordnung R sind in dem in FIG 1 skizzierten Ausführungsbeispiel einstellbare Wellenlängen-Konverter λ/λ₁, ..., λ/λ₁, ..., λ/λ_{N} angeschlossen, in denen das jeweils ankommende Signal unabhängig von der bisherigen (Eingangs-)Wellenlänge auf eine jeweils fest definierte (Ausgangs-)Wellenlänge umgesetzt wird. Es sei bemerkt, dass solche Wellenlängen-Konverter entfallen, wenn eine Umsetzung von Wellenlängen nicht vorgesehen ist. Die Wellenlängen-Konverter λ/λ₁, ..., λ/λ_{N} bzw. bei deren Wegfall die entsprechenden Ausgänge der Raumkoppelanordnung R werden ausgangsseitig durch Wellenlängen-Multiplexer WM1, ..., WMl zusammengefasst, die jeweils die ihnen zugeführten Signale unterschiedlicher Wellenlängen zu einem WDM-Signal zusammenfassen und die ausgangsseitig zu den Ausgangsfasern 1L, ..., lL führen.

Der Erfindung liegt nun der Gedanke zugrunde, dass in der - mit jeweils N = 2ⁿ Eingängen und Ausgängen, jeweils einem Raumkoppelanordnungs-Eingang nachfolgenden Eingangs-Pyramiden von 1x2-Schaltern und jeweils einem Raumkoppelanordnungs-Ausgang vorangehende Ausgangs-Pyramiden von 1x2-Schaltern sowie einem zwischen den die Eingangspyramidenbasen bildenden Ausgängen der Eingangs-Pyramiden und den die Ausgangspyramidenbasen bildenden Eingängen der Ausgangs-Pyramiden symmetrisch verlaufendem Perfect-Shuffle-Zwischenleitungsnetz von N² Zwischenleitungen, durch das jede der N Eingangspyramiden mit jeder der N Ausgangspyramiden verbunden ist, gebildeten - Raumkoppelanordnung R nur ein Nebensprechen zwischen Eingängen, die sich in ihrer Position um M = 2^{m} (mit 1 ≤ m ≤ n-1) oder um ein Vielfaches davon unterscheiden, kritisch ist. Im Ausführungsbeispiel nach FIG 1 ist diese Kritizität dadurch bedingt, dass eben an solchen sich in der Zählreihenfolge um M = 2^{m} unterscheidenden Eingängen Signale gleicher optischer Trägerfrequenz auftreten; so möge beispielsweise an den Eingängen ei und ej der Raumkoppelanordnung R gemäß FIG 1 jeweils Licht der Wellenlänge λᵢ auftreten.

Zu einem von einer i-ten Eingangspyramide (Ei in FIG 1) zu einer Ausgangspyramide, beispielsweise der Ausgangspyramide Ap (in FIG 1), verlaufenden Verbindungsweg, der sich vom Eingang ei der Eingangspyramide Ei über diese Eingangspyramide, die deren Ausgang eip mit dem entsprechenden Ausgangspyramideneingang ipa verbindende Zwischenleitung izp und die Ausgangspyramide Ap zu derem Ausgang ap erstreckt, verläuft ein kritischer Nebensprechweg beispielsweise von einer j-ten (mit | i-j | = v·2^{m}; v = 1, 2, ...) Eingangspyramide (Ej in FIG 1) zu der genannten Ausgangspyramide Ap, der sich vom Eingang ej der Eingangspyramide Ej über diese Eingangspyramide, die deren Ausgang ejp mit dem entsprechenden Ausgangspyramideneingang jpa verbindende Zwischenleitung jzp und die Ausgangspyramide Ap zu derem Ausgang ap erstreckt.

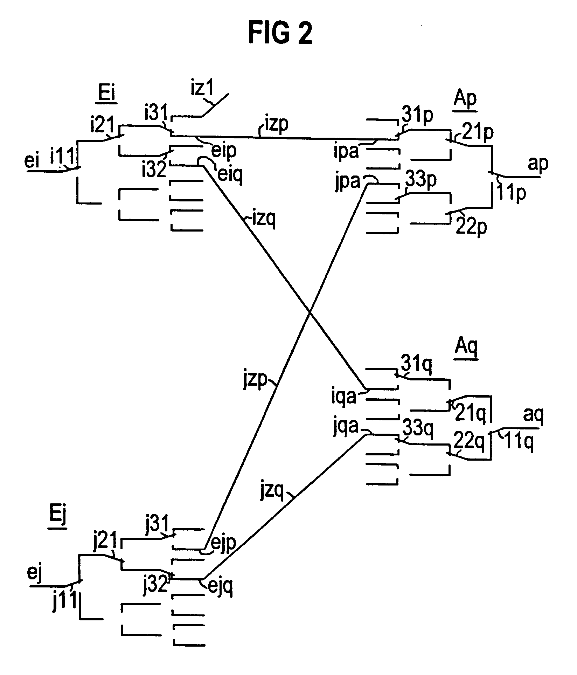

Verbindungsweg und Nebensprechweg werden noch deutlicher aus der Zeichnung FIG 2 ersichtlich, in der die beiden Eingangs-pyramiden Ei und Ej und die Ausgangspyramide Ap (siehe auch FIG 1) sowie eine weitere Ausgangspyramide Aq weiter ins Einzelne gehend dargestellt sind. Jede Pyramide ist mit n Stufen von zweier Durchschaltezustände fähigen integriert-optischen 1x2-Schaltern aufgebaut, wobei, wie die für den Schalter i31 der Eingangspyramide Ei und für den Schalter 31p der Ausgangspyramide Ap angedeutet ist, an jeden der jeweils 2ⁿ⁻¹ pyramidenbasisseitigen 1x2-Schalter (i31; 31p) der n-stufigen Pyramiden (Ei; Ap) von 1x2-Schaltern jeweils zwei Zwischenleitungen (izl, izp; 1zp,izp) direkt angeschlossen sein mögen.

Der zuvor an Hand der FIG 1 betrachtete Verbindungsweg von der i-ten Eingangspyramide Ei zu der Ausgangspyramide Ap verläuft gemäß FIG 2 vom Eingang ei der Eingangspyramide Ei über n 1x2-Schalter i11, i21, i31, die diesen Eingang ei mit dem entsprechenden Eingangspyramidenausgang eip verbinden, weiter über die den Eingangspyramidenausgang eip mit dem entsprechenden Ausgangspyramideneingang ipa verbindende Zwischenleitung izp und schliesslich über n 1x2-Schalter 31p, 21p, 11p hinweg, die diesen Ausgangspyramideneingang ipa mit dem Ausgang ap der Ausgangspyramide Ap verbinden, zu diesem Ausgang ap.

Ein anderer Verbindungsweg möge von der Eingangspyramide Ej zu der Ausgangspyramide Aq verlaufen, und zwar vom Eingang ej der Eingangspyramide Ej über n 1x2-Schalter j11, j21, j32, die diesen Eingang ej mit dem entsprechenden Eingangspyramidenausgang ejq verbinden, weiter über die Zwischenleitung jzq, die den Eingangspyramidenausgang ejq mit dem entsprechenden Ausgangspyramideneinang jqa verbindet, und schliesslich über n diesen Ausgangspyramideneingang jqa mit dem Ausgang aq der Ausgangspyramide Aq verbindende 1x2-Schalter 33q, 22q, 11q hinweg zu diesem Ausgang aq.

Der zuvor an Hand der FIG 1 betrachtete Nebensprechweg von der j-ten Eingangspyramide Ej zu der Ausgangspyramide Ap verläuft gemäß FIG 2 vom Eingang ej der Eingangspyramide Ej über n diesen Eingang ej mit dem entsprechenden Eingangspyramidenausgang ejp verbindende 1x2-Schalter j11, j21, j31, weiter über die den Eingangspyramidenausgang ejp mit dem entsprechenden Ausgangspyramideneingang jpa verbindende Zwischenleitung jzp und schliesslich über n diesen Ausgangspyramideneingang jpa mit dem Ausgang ap der Ausgangspyramide Ap verbindende 1x2-Schalter 33p, 22p, 11p hinweg zu diesem Ausgang ap.

In diesem Nebensprechweg werden alle nicht zugleich in einen Verbindungsweg einbezogenen 1x2-Schalter in den Schaltzustand maximaler Nebensprechdämpfung geschaltet.Dies geschieht im Ausführungsbeispiel gemäß FIG 2 mit gerade zweier Durchschaltezustände fähigen 1x2-Schaltern in folgender Weise:

In der Eingangspyramide Ej werden die nicht zugleich in einen Verbindungsweg einbezogenen, zwischen dem Pyramideneingang ej und dem mit der Ausgangspyramide Ap verbundenen Eingangspyramidenausgang ejp liegenden 1x2-Schalter in die vom Nebensprechweg jeweils wegweisende Durchschaltelage geschaltet. Im betrachteten Ausführungsbeispiel ist dies der Schalter j31, während die ausserdem in dem betrachteten Nebensprechweg liegenden Schalter j11 und j21 zugleich in dem zuvor schon betrachteten anderen Verbindungsweg ej - ejq - jzq - jqa - aq liegen, durch den ihre Durchschaltelage bestimmt ist; allgemein gesprochen können, je nach den jeweils durchgeschalteten Verbindungen, zwischen 0 und m zwischen dem Pyramideneingang ej und dem mit der Ausgangspyramide Ap verbundenen Eingangspyramidenausgang ejp liegende 1x2-Schalter in die vom Nebensprechweg jeweils wegweisende Durchschaltelage geschaltet werden.

In der Ausgangspyramide Ap sind dagegen stets m nicht zugleich in einen Verbindungsweg einbezogene, zwischen dem mit der Eingangspyramide Ej verbundenen Pyramideneingang jpa und dem Pyramidenausgang ap liegende 1x2-Schalter, im Beispiel die Schalter 33p, 22p, in die vom Nebensprechweg jeweils wegweisende Durchschaltelage geschaltet.

Entsprechendes gilt auch für den zum zuvor schon betrachteten anderen Verbindungsweg ej - ejq - jzq - jqa - aq bestehenden Nebensprechweg von der i-ten Eingangspyramide Ei zu der Ausgangspyramide Aq. Dieser Nebensprechweg verläuft gemäß FIG 2 vom Eingang ei der Eingangspyramide Ei über n diesen Eingang ei mit dem entsprechenden Eingangspyramidenausgang eiq verbindende 1x2-Schalter i11, i21, i32, weiter über die den Eingangspyramidenausgang eiq mit dem entsprechenden Ausgangspyramideneingang iqa verbindende Zwischenleitung izq und weiter über n diesen Ausgangspyramideneingang iqa mit dem Ausgang aq der Ausgangspyramide Aq verbindende 1x2-Schalter 31q, 21q, 11q hinweg zu diesem Ausgang aq.

Auch in diesem Nebensprechweg werden alle nicht zugleich in einen Verbindungsweg einbezogenen 1x2-Schalter in den Schaltzustand maximaler Nebensprechdämpfung geschaltet:

In der Eingangspyramide Ei werden die nicht zugleich in einen Verbindungsweg einbezogenen, zwischen dem Pyramideneingang ei und dem mit der Ausgangspyramide Aq verbundenen Eingangspyramidenausgang eiq liegenden 1x2-Schalter in die vom Nebensprechweg jeweils wegweisende Durchschaltelage geschaltet. Im betrachteten Ausführungsbeispiel ist dies der Schalter i32, während die ausserdem in dem betrachteten Nebensprechweg liegenden Schalter i11 und i21 zugleich in dem zuerst betrachteten anderen Verbindungsweg ei - eip - izp - ipa - ap liegen, durch den ihre Durchschaltelage bestimmt ist.

In der Ausgangspyramide Aq sind wiederum stets m nicht zugleich in einen Verbindungsweg einbezogene, zwischen dem mit der Eingangspyramide Ei verbundenen Pyramideneingang iqa und dem Pyramidenausgang aq liegende 1x2-Schalter, im Beispiel die Schalter 31q, 21q, in die vom Nebensprechweg jeweils wegweisende Durchschaltelage geschaltet.

Im Vergleich mit einer entsprechenden Raumkoppelanordnung mit in der eingangs erwähnten Weise zweier Durchschaltezustände und eines dritten Zustands fähigen 1x2-Schaltern, in der sich jeweils alle gerade nicht in einem Verbindungsweg liegenden Schalter in dem dritten Schaltzustand befinden, verbessert sich in der gemäß der Erfindung betriebenen Raumkoppelanordnung R für einen beliebiegen Verbindungsweg die Nebensprechdämpfung mindestens um m· (s - u) [dB] und höchstens um 2m· (s - u) [dB], wobei s die Nebensprechdämpfung eines 1x2-Schalters im (jeweils anderen) Durchschaltezustand und u die Dämpfung eines 1x2-Schalters im dritten Schaltzustand ist. Wenn man die Nebensprechdämpfung eines 1x2-Schalters mit s = 20 dB und die Nebensprechdämpfung (Einfügedämpfung) im dritten Schaltzustand mit u = 4 dB ansetzt, bringt die Erfindung damit im betrachteten Ausführungsbeispiel mit n = 3 und m = 2 eine Verbesserung der Nebensprechdämpfung für einen beliebigen Signalpfad zwischen Eingang und Ausgang um minimal 32 dB und maximal 64 dB mit sich.

Abschliessend sei noch bemerkt, dass die Erfindung im Vorstehenden zwar im Rahmen in einer optischen Koppelanordnung mit eingangsseitigen Wellenlängen-Demultiplexern, einer nachfolgenden NxN-Raumkoppelanordnung mit Pyramiden von integriert-optischen 1x2-Schaltern, ggf.nachfolgenden Wellenlängen-Konvertern und ausgangsseitigen Wellenlängen-Multiplexern beschrieben wird, dass die Erfindung hieran aber nicht gebunden ist, sondern auch ganz allgemein bei einer mehrstufigen NxN-Raumkoppelanordnung mit N = 2ⁿ (mit n = 1, 2, 3, ...) jeweils einem Raumkoppelanordnungs-Eingang nachfolgenden Eingangs-Pyramiden von zweier Durchschaltezustände fähigen 1x2-Schaltern und N = 2ⁿ jeweils einem Raumkoppelanordnungs-Ausgang vorangehenden Ausgangs-Pyramiden von zweier Durchschaltezustände fähigen 1x2-Schaltern sowie einem zwischen Eingangs- und Ausgangs-Pyramiden verlaufenden (Perfect Shuffle-)Zwischenleitungsnetzwerk von N² Zwischenleitungen Anwendung finden kann, in der ein Kanalnebensprechen zwischen um jeweils M = 2^{m} (mit m = 1, 2, ..., n-1) Eingänge oder ein Vielfaches davon gegeneinander versetzten Eingängen kritisch ist; die obigen Erläuterrungen zu FIG 2 gelten dafür in gleicher Weise.

## Patentansprüche

1. Verfahren zum Betrieb einer (2·(log₂ N))-stufigen NxN-Raumkoppelanordnung (R) mit
N = 2ⁿ - mit n = 1, 2, 3, ... - jeweils einem Raumkoppelanordnungs-Eingang (e1,...,eN) nachfolgenden, (log₂N)-stufigen Eingangs-Pyramiden (E1, ..., EN) von zweier Durchschaltezustände fähigen 1x2-Schaltern und
N = 2ⁿ jeweils einem Raumkoppelanordnungs-Ausgang (a1,..., aN) vorangehenden, (log₂N)-stufigen Ausgangs-Pyramiden (A1, .., AN) von zweier Durchschaltezustände fähigen 1x2-Schaltern sowie
einem zwischen Eingangs- und Ausgangs-Pyramiden verlaufenden Perfect Shuffle-Zwischenleitungsnetzwerk von N² Zwischenleitungen (1z1, ..., NzN),
in der ein Kanalnebensprechen zwischen um jeweils M = 2^{m} - mit m = 1, 2, ..., n-1 - Eingänge oder ein Vielfaches davon gegeneinander versetzten Eingängen kritisch ist,
insbesondere in einer optischen Koppelanordnung mit
eingangsseitigen, jeweils das auf einer zugehörigen Eingangsfaser (L1, ..., Ll) ankommende WDM-Signal nach Wellenlängen aufteilenden Wellenlängen-Demultiplexern (WD1,.., WDl),
der nachfolgenden, mit Pyramiden von zweier Durchschaltezustände fähigen integriert-optischen 1x2-Schaltern gebildeten NxN-Raumkoppelanordnung (R), bei der an jedem Eingang (ei) stets Licht ein und derselben, sich in Abständen von jeweils M = 2^{m} - mit m = 1, 2, ..., n-1 - Eingängen wiederholenden Wellenlänge auftritt und der in einer optischen Raum-Wellenlänge-(R-W-)Koppelanordnung die jeweilige ankommende Wellenlänge auf eine feste abgehende Wellenlänge umsetzende einstellbare Wellenlängen-Konverter (λ/λₚ) nachfolgen können,
und ausgangsseitigen, jeweils die ihnen zugeführten Signale unterschiedlicher Wellenlängen zu einem WDM-Signal zusammenfassenden Wellenlängen-Multiplexern (WM1, ..., WMl), demzufolge
- bei direktem Anschluss jeweils zweier Zwischenleitungen (iz1, izp) an jeden der jeweils 2ⁿ⁻¹ pyramidenbasisseitigen 1x2-Schalter (i31) n-stufiger Pyramiden (Ei) von 1x2-Schaltern - zu einem von einer i-ten Eingangspyramide (Ei) zu einer Ausgangspyramide (Ap) verlaufenden Verbindungsweg,
der sich vom Eingang (ei) der Eingangspyramide (Ei) über die diesen Eingang (ei) mit dem Eingangspyramidenausgang (eip) verbindenden n 1x2-Schalter (i11, i21, i31), die den Eingangspyramidenausgang (eip) mit dem entsprechenden Ausgangspyramideneingang (ipa) verbindende Zwischenleitung (izp) und die diesen Ausgangspyramideneingang (ipa) mit dem Ausgang (ap) der Ausgangspyramide (Ap) verbindenden n 1x2-Schalter (31p, 21p, 11p) zu diesem Ausgang (ap) erstreckt,
in einem von einer j-ten - mit |i-j| = v·2^{m}; v = 1, 2, ... - Eingangspyramide (Ej) zu der genannten Ausgangspyramide (Ap) verlaufenden Nebensprechweg,
der sich vom Eingang (ej) der Eingangspyramide (Ej) über die diesen Eingang (ej) mit dem Eingangspyramidenausgang (ejp) verbindenden n 1x2-Schalter (j11, j21, j31), die den Eingangspyramidenausgang (ejp) mit dem entsprechenden Ausgangspyramideneingang (jpa) verbindende Zwischenleitung (jzp) und die diesen Ausgangspyramideneingang (jpa) mit dem Ausgang (ap) der Ausgangspyramide (Ap) verbindenden n 1x2-Schalter (33p, 22p, 11p) zu diesem Ausgang (ap) erstreckt,
alle nicht zugleich in einen Verbindungsweg einbezogenen 1x2-Schalter (j31, 33p, 22p) in den Schaltzustand maximaler Nebensprechdämpfung geschaltet werden.

2. Verfahren nach Anspruch 1,
**dadurch gekennzeichnet**,
dass in der Eingangspyramide (Ej) maximal m nicht zugleich in einen Verbindungsweg einbezogene, zwischen dem Pyramideneingang (ej) und dem mit der Ausgangspyramide (Ap) verbundenen Pyramidenausgang (ejp) liegende 1x2-Schalter (j31) und in der Ausgangspyramide (Ap) stets m nicht zugleich in einen Verbindungsweg einbezogene, zwischen dem mit der Eingangspyramide (Ej) verbundenen Pyramideneingang (jpa) und dem Pyramidenausgang (ap) liegende 1x2-Schalter (33p, 22p) in die vom Nebensprechweg jeweils wegweisende Durchschaltelage geschaltet werden.

## Claims

1. Method for operating a (2A(log₂ N))-stage NxN space division switching arrangement (R) having
N = 2ⁿ (where n = 1, 2, 3, ...), (log₂ N)-stage input pyramids (E1, ..., EN), which each follow a space division switching arrangement input (e1,...,eN), of 1x2 switches which may have two switched-on states, and
N = 2ⁿ (log₂ N)-stage output pyramids (A1, ..., AN), which each precede a space division switching arrangement output (a1,...,aN), of 1x2 switches which may have two switched-on states, as well as
a (perfect shuffle) link network, which runs between input and output pyramids, of N² links (1z1, ..., NzN),
in which any channel crosstalk between inputs, which are mutually offset in each case by M = 2^{m} - where m = 1, 2, ..., n-1 - inputs or a multiple thereof, is critical,
in particular in an optical switching arrangement having wavelength demultiplexers (WD1,..., WDl) on the input side which each split the WDM signal arriving on an associated input fibre (L1, ..., Ll) on the basis of wavelengths,
of the downstream NxN space division switching arrangement (R) which is formed by pyramids of integratedoptical 1x2 switches which may have two switched-on states, in which arrangement light at one and the same wavelength, which is repeated at intervals of in each case M = 2^{m} - where m = 1, 2, ..., n-1 - inputs, always occurs at each input (ei), and which, in an optical space-division wavelength (R-W) switching arrangement, can be followed by adjustable wavelength converters (λ/λₚ) which convert the respective incoming wavelength to a fixed outgoing wavelength,
and wavelength multiplexers (WM1, ..., WMl) on the output side which in each case combine the signals at different wavelengths supplied to them to form a WDM signal, according to which method
- when in each case two links (iz1, izp) are directly connected to each of the respective 2ⁿ⁻¹ 1x2 switches (i31) on the pyramid base side of n-stage pyramids (Ei) of 1x2 switches -
for a connecting path running from an i-th input pyramid (Ei) to an output pyramid (Ap),
which connecting path extends from the input (ei) of the input pyramid (Ei) to the output (ap) of the output pyramid (Ap), via the n 1x2 switches (i11, i21, i31) which connect this input (ei) to the input pyramid output (eip), the link (izp) which connects the input pyramid output (eip) to the corresponding output pyramid input (ipa) and the n 1x2 switches (31p, 21p, 11p) which connect this output pyramid input (ipa) to the said output (ap) of the output pyramid (Ap),
in a crosstalk path running from a j-th - where *i-j* = vA2^{m}; v = 1, 2, ... - input pyramid (Ej) to the said output pyramid (Ap),
which crosstalk path extends from the input (ej) of the input pyramid (Ej) to the output (ap) of the output pyramid (Ap), via the n 1x2 switches (j11, j21, j31) which connect this input (ej) to the input pyramid output (ejp), the link (jzp) which connects the input pyramid output (ejp) to the corresponding output pyramid input (jpa) and the n 1x2 switches (33p, 22p, 11p) which connect this output pyramid input (jpa) to the said output (ap) of the output pyramid (Ap),
all the 1x2 switches (j31, 33p, 22p) which are not at the same included in a connecting path are switched to the switching state of maximum crosstalk attenuation.

2. Method according to Claim 1,
characterized
in that a maximum of m 1x2 switches (j31) which are not at the same time included in a connecting path and are located between the pyramid input (Ej) and the pyramid output (ejp) which is connected to the output pyramid (Ap) are connected in the input pyramid (Ej), and m 1x2 switches (33p, 22p) which are not at the same time included in a connecting path and are connected between the pyramid output (ap) and the pyramid input (jpa) which is connected to the input pyramid (Ej), these switches being in the switched-on position in each case pointing away from the crosstalk path.

## Revendications

1. Procédé pour faire fonctionner un dispositif (R) de connexion dans l'espace NxN à (2 · (log2 N)) étages, comportant
N = 2ⁿ - avec n = 1, 2, 3, ... - pyramides (e1,..., eN) d'entrée à (log₂ N) étages, en aval de chaque fois une entrée (E1, ..., EN) du dispositif de connexion dans l'espace, de commutateurs 1x2 capables de prendre deux états d'interconnexion et
N = 2ⁿ pyramides (A1,..., AN) de sortie à (log₂ N) étages, en amont chaque fois d'une sortie (a1,..., aN) du dispositif de couplage dans l'espace, de deux commutateurs 1×2 capables de prendre deux états d'interconnexion, ainsi que
un réseau de lignes intermédiaires perfect Shuffle, s'étendant entre les pyramides d'entrée et les pyramides de sortie, de N² lignes (1z1, ...., NzN) intermédiaires,
dans lesquelles une diaphonie de canaux entre des entrées décalées chaque fois de M = 2^{m} -avec m = 1, 2, ..., n-1- entrées ou d'un multiple de ce nombre est critique,
notamment dans un dispositif de connexion optique comportant
- des démultiplexeurs (WD1, ..., WDI), de longueurs d'onde situées côté entrée subdivisant chaque fois suivant des longueurs d'onde le signal WDM arrivant sur une fibre (L1, ..., Ll) d'entrée associée,
le dispositif (R) de connexion dans l'espace NxN en aval, qui est formé de pyramides de commutateurs 1×2 optiques intégrés, capables de prendre deux états d'interconnexion, dans lequel il apparaît à chaque entrée (ei) toujours de la lumière d'une seule et même longueur d'onde se répétant à des intervalles de chaque fois M = 2^{m} -avec m = 1,2, ..., n-1- entrées et auxquelles peuvent succéder dans un dispositif optique de connexion de longueurs d'onde dans l'espace (R-W) des convertisseurs (λ/λₚ) de longueurs d'onde réglables, convertissant les longueurs d'onde associées qui arrivent à une longueur d'onde fixe qui part,
et des multiplexeurs (WM1, ..., WMI) de longueurs d'onde situés côté sortie, réunissant en un signal WDM les signaux de longueurs d'onde différentes qui leur sont envoyés,
si dans lequel
en cas de raccordement direct respectivement de deux lignes (iz1, izp) intermédiaires à chacun des 2ⁿ⁻¹ commutateurs (i31) 1x2, situés du côté de la base des pyramides, de pyramides (Ei) à n étages de 1x2 commutateurs à une voie de liaison qui va d'une i-ième pyramide (Ei) d'entrée à une pyramide (Ap) de sortie et qui s'étend de l'entrée (ei) de la pyramide (Ei) d'entrée, en passant par les n commutateurs (i11, i21, i31) 1x2 reliant cette entrée (ei), à la sortie (eip) de la pyramide d'entrée, par la ligne (izp) intermédiaire reliant la sortie (eip) des pyramides d'entrée à l'entrée (ipa) des pyramides de sortie correspondante et par les n commutateurs (31p, 21, 11p) 1x2, reliant cette entrée (ipa) de pyramide de sortie à la sortie (ap) de la pyramide (Ap) de sortie, à cette sortie (Ap),
dans une voie de diaphonie s'étendant d'une j-ième -avec valeur absolue de |i-j| = v · 2^{m}; v = 1, 2, ...- pyramides (Ej) d'entrée à ladite pyramide (Ap) de sortie,
qui s'étend de l'entrée (Ej) de la pyramide d'entrée en passant par les n commutateurs (j11, j21, j31) 1x2 reliant cette entrée (Ej) à la sortie (ejp) de pyramide d'entrée, par la ligne (jzp) intermédiaire reliant la sortie (ejp) de pyramides d'entrée à l'entrée (jpa) de pyramide de sortie correspondante et par les n commutateurs (33p, 22p, 11p) 1x2 reliant cette entrée (jpa) de pyramides de sortie à la sortie (ap) de la pyramide (ap) de sortie, à cette sortie (ap)
tous les commutateurs (j31, 33p, 22p) 1x2 qui ne sont pas intégrés en même temps à une voie de liaison sont branchés à l'état de commutation d'affaiblissement diaphonique maximum.

2. Procédé suivant la revendication 1, caractérisé en ce qu'il est branché, dans la pyramide (Ej) d'entrée, au maximum m commutateurs (j31) 1x2 qui ne sont pas intégrés en même temps à une voie de liaison et qui se trouvent entre l'entrée (Ej) de pyramide et la sortie (ejp) de pyramide reliée à la pyramide (Ap) de sortie, et, dans la pyramide (Ap) de sortie toujours n commutateurs (33p, 22p) 1x2 qui ne sont pas intégrés en même temps à une voie de liaison et qui se trouvent entre l'entrée (jpa) de pyramide, reliée à la pyramide (Ej) d'entrée et la sortie (ap) de pyramide, à l'état d'interconnexion chaque fois s'éloignant de la voie de diaphonie.
